# EUROPEAN PATENT SPECIFICATION

(11) **EP 0 298 548 B1**
(45) Date of publication and mention of the grant of the patent: **01.09.1993**
(21) Application number: 88201337.8
(22) Date of filing: 28.06.1988
(51) Int. Cl.: A01K 5/02, A23N 17/00

(54) **Mixing and dosing apparatus, e.g. a fodder container**
Misch- und Dosierapparat, z.B. Futterbehälter
Appareil pour brassage et dosage, par exemple conteneur à fourrage

(30) Priority: 29.06.1987 NL 8701521; 10.11.1987 NL 8702687; 08.12.1987 NL 8702958; 15.01.1988 NL 8800089
(43) Date of publication of application: 11.01.1989
(73) Proprietor: LITECH B.V., NL-7521 PD Enschede (NL)
(72) Inventor: Liet, Fredericus, NL-7581 HD Losser (NL)
(74) Representative: de Vries, Johannes Hendrik Fokke

(56) References cited:
- DE-A- 2 639 423
- DE-A- 2 935 493
- DE-A- 3 419 997
- DE-B- 2 918 519
- FR-A- 2 528 671
- NL-A- 257 602
- US-A- 3 258 165
- US-A- 3 565 044
- US-A- 3 730 141
- US-A- 4 667 623
- LANDBOUWMECHANISATIE, vol. 35, no. 3, March 1984, pages 259-261; Deventer, NL; A.H. IPEMA et al.: "Een systeem voor individuele ruwvoerverstrekking"

## Description

The invention relates to an apparatus for the mixing or loosening up and the dosed delivery of loose or lightly cohesive material, e.g. fodder, according to the preamble of claim 1.

Such an apparatus is known from DE-A-26 39 423. In this known apparatus the agitator is made as a transporting auger which transports the material to the single delivery device which is provided at one end of the transport auger.

DE-A-29 35 493 describes an apparatus according to the preamble of claim 1 having a second container for concentrate which second container is provided with an agitator made such that the concentrate is impelled towards three discharge openings which discharge the concentrate onto a single transverse conveyor. This conveyor discharges the material to the animal.

The invention aims to provide an apparatus of the above-mentioned type which is adapted to deliver the material with a high level of accuracy in a fully automatic manner to a number of animals at a time.

To this end, the apparatus according to the invention is characterized by the features of claim 1.

The invention will now be further explained by reference to the drawings, in which:
Fig. 1 shows a schematic perspective view, partly cut away, of an example of an apparatus according to the invention;
Figure 2 shows a partly cut-away perspective view of the supply container with feeding stations adjoined thereto corresponding to figure 1;
Figure 3 shows a cut away perspective view of an apparatus according to the invention in a first embodiment;
Figure 4 shows an agitator in another embodiment;
Figure 5 shows an agitator in yet another embodiment;
Figure 6 shows a strongly schematic transverse section through another apparatus according to the invention;
Figure 7 shows a view corresponding to figure 6 of yet another embodiment;
Figure 8 shows a view corresponding to figures 6 and 7 of a further embodiment;
Figure 9 shows a side view of the apparatus according to figure 6;
Figure 10 shows a view corresponding to figure 5 of a crankshaft-like agitator;
Figure 11 shows a partly cut away perspective view of a detail of a variant;
Figure 12 shows a schematic perspective view of a fodder container;
Figure 13 shows a further embodiment;
Figure 14 shows a toggle; and
Figures 15 and 16 show details of variants on an enlarged scale.

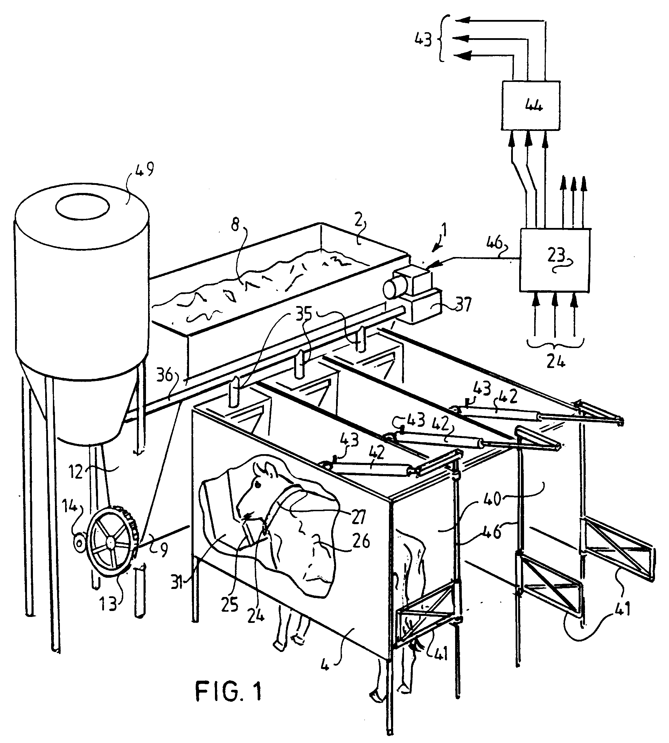

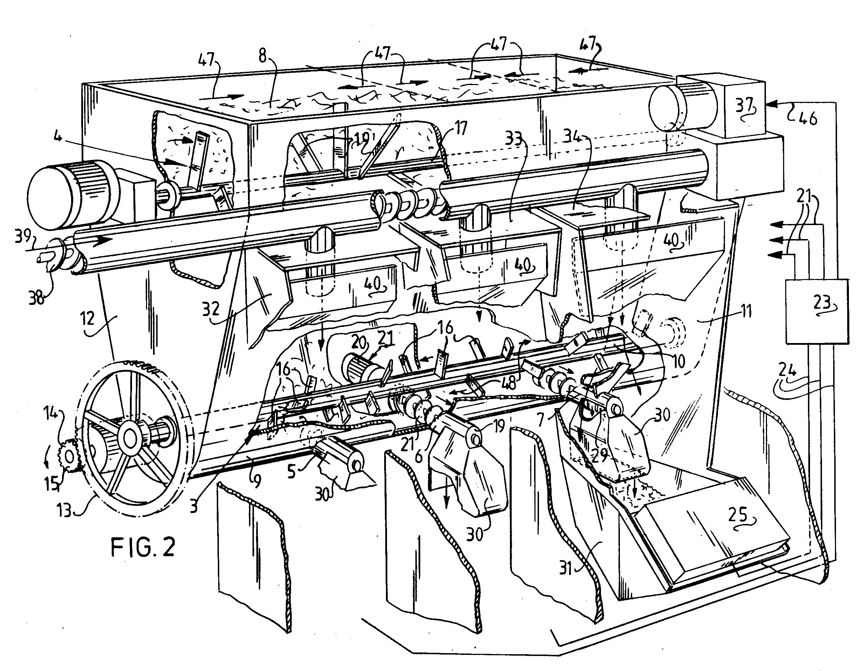

Figure 1 shows an apparatus 1 for the mixing or loosening up and the dosed delivery of fodder. The apparatus 1 comprises a supply container 2 for the fodder, which container narrows in a downward direction, as is clearly shown in figures 1 and 2. As shown in figure 2, the apparatus further comprises a first agitator 3, to be described in more detail below, and a second agitator 4. The apparatus further comprises three delivery devices 5, 6, 7 connecting to the underside of the holder for the dosed delivery of the fodder 8.

The container 2 has a prismatic form, i.e. it has a substantially constant cross section everywhere with respect to a horizontal line.

The bottom zone 9 of the container 2 has the form of a part of a cylinder.

The agitator 3 comprises an axle 10, whereof the centre line at least approximately coincides with the centre line of the bottom zone 9. The axle 10 is rotatably supported in he end walls 11, 12 of the container 2 and carries on the outside of the container 2 a gear wheel 13 that is coupled via a drive gear wheel 14 to a motor 15. The axle 10 supports vanes which are generally indicated by 16 and all have an angular disposition such that, in conjunction with the rotational direction of the axle 10, the impel the fodder present in the container 2 in the direction of the imaginary vertical plane in which the nearest delivery device 5, 6, 7 is situated.

Also present in the container is the second agitator 4, which has the same construction as the first agitator 3. This second agitator 4 comprises an axle 17 which is driven by a geared-down motor 18 and supports vanes, generally indicated by 19, which have an angular disposition such that, in conjunction with the rotational direction of the axle 17, they impel the fodder present in the container 2 in the direction of the imaginary vertical plane in which the nearest delivery device 5, 6, 7 is situated. From figure 2 it will be clear that the axle 17 is also rotatably supported in the end walls 11, 12 of the container 2.

For the purpose of explaining the operation of the delivery devices 5, 6 7, a description of the device 6 will now be taken as sufficient.

This device comprises a discharge tube 19 connecting to the bottom zone 9 of the container 2, in which tube is disposed an archimedean screw 21 which is rotationally drivable by an electric motor 20 and extends some way into the container 2. The motor 20 is activated via a cable 21 by a central control unit 23 which comprises a memory, in which data on the individual animals to be fed are held, in this case exclusively concerning the quantity of fodder to be supplied per feed. The central control unit 23 receives an identification signal via a cable 24 from a receiver 25, which cooperates with transponder 28, which is carried by an animal 26 by means of a collar 27 and is provided with an identification of the animal concerned. On the basis of the recognition of a specific animal and the required feeding pattern for that animal held in the memory, the empowerment of the motor 20 via cable 21 takes place for a predefined time. The motor 20 drives the screw 21 during the activation phase for a period such that the screw 21 conveys the corresponding quantity of fodder in the direction of a discharge opening 29 (see the delivery device 7), to which a cap 30 is connected. Through this cap the quantity of delivered fodder dosed by the delivery device 6 is discharged into a feeding trough 31.

The vanes 16 are so axially positioned on the axle 10 that the archimedean screws 21 fall between the respective adjacent vanes.

The apparatus 1 is provided with, appended to each delivery device 5, 6, 7, and additional delivery device 32, 33, 34 for concentrate. Each of these devices 32, 33, 34 comprises a discharge tube 35 connecting to a supply tube 36, in which an archimedean screw 38, rotationally drivable by means of a geared-down motor 37, is situated. As indicated by an arrow 39, the concentrate is transported from a supply container (not shown) by the screw 38 in the direction of the discharge tubes 35 and deposited via these tubes and via a funnel 40 into the feeding troughs 31.

The supply tube 36 for the concentrate connects to a supply container 49.

Figure 1 shows that each feeding trough 31 is located in a space bounded by partitions 40, in which there is room for one animal 26 only. Each space is closable by means of a gate 41 and connected to a pneumatic cylinder 42, which is actuated through a pressure hose 43 by an actuation unit 44, which is controlled by the central control unit 23. When an animal is recognized by the receiver 25, the central control unit 23 controls the actuation unit 44 for the delivery of force to the relevant pneumatic cylinder 42, which thereupon pulls on a lever 45. This lever 45 coupled to a shaft 46, on which the gate 41 is mounted. Thus the space concerned in which the animal 26 is present is closed, so that the animal can eat without being disturbed and can not be pushed away from its place by another animal. After the elapse of a feeding period which can be specific to a given animal, the actuation of the pneumatic cylinder 42 is reversed, whereby the gate 41 is reopened and the animal can leave the feeding space.

The recognition of an animal can be used, as well as for the closing of the gate, for the empowerment of the motor 20 during a predefined time depending on the required dosage.

Likewise the empowerment of the geared-down motor 37 can, via a cable 46, be started at the appropriate moment and maintained during a predefined period which is stored in the central control unit.

Arrows 47 indicate that the vanes 19 of the second agitator 4 transport the fodder present in the container 2 in the direction of the nearest delivery device 5, 6, 7.

Arrows 48 indicate the same for the vanes 16 of the first agitator 3.

For the dosed delivery of fodder, the device according to the invention is particularly, but not exclusively, suited to application in a stall with cow cubicles. The invention also extends to a fodder mixing and dosing wagon with one or more discharge tubes with an archimedean screw which is disposed in a transverse direction, and likewise a wagon with one or more supplementary agitator. In the case of more than one discharge tube each with discharge transport means, these discharge transport means can be individually empowered, so that fodder is delivered through one or more delivery devices, according to choice. This also makes a variable dosage possible.

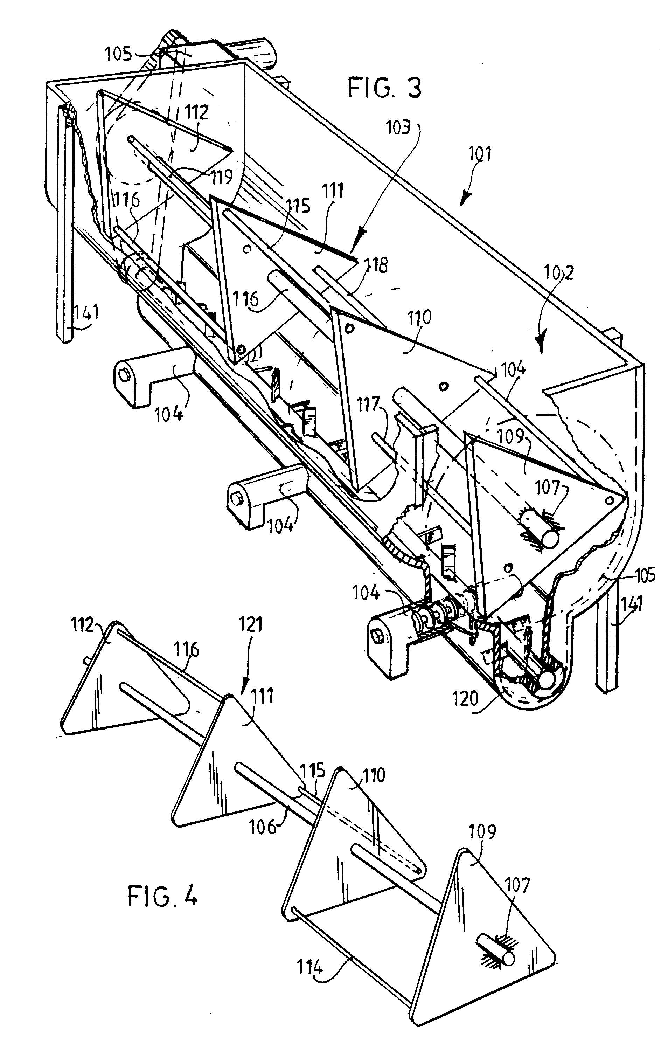

Figure 3 shows an apparatus 101 according to the invention. This apparatus 101 serves for the mixing or loosening up and the dosed delivery of fodder and comprises a fodder bunker 102 supported by four legs 141, in which bunker a further to be specified agitator 103 is situated. Connected to the underside of the bunker are three delivery devices 104. The zone of the bunker indicated by 105 has partly the form of a cylinder. The centre line of that cylinder coincides with the centre line of an axle 106, which is the central axle of the agitator 103. The axle 106 is rotatably supported by symbolically indicated bearings 107 in the bunker 102 and can be rotationally driven by a motor 108.

The agitator 103 is embodied as four triangular plates 109, 110, 111, 113 mounted on the axle 106, between which steel rods 114-119 extend. The rods 114-116 are arranged at the corners of opposite plates; the rods 117-119 are arranged at an angular displacement of 120° in relation thereto at a lesser radial distance from the centre line of axis 106. The rods 115, 118 are displaced through 120° with respect to the rods 114, 117. The rods 116, 119 are displaced through 120° with respect to the rods 115, 118.

When driven by the motor 108 the rods 114, 115, 116 move at a relatively small distance from the cylindrical zone 105. With this embodiment it appears that the mixing and agitation process takes place very effectively.

Under zone 105 there extends a further part-cylindrical zone 120, in which there is situated a further agitator, also driven by motor 108, which agitator may for instance be embodied as an axle with one or more screws or vanes, and serves to supply the mixed fodder to the delivery devices 104.

Figure 4 shows an agitator 121 which corresponds to a large extent with the agitator 103 according to figure 3. However it differs from agitator 103 in that the rods 117, 118 and 119 are omitted. Surprisingly, it appears that with an agitator of this kind an excellent effectiveness of the apparatus is obtained with the use of a relatively low driving power. This embodiment has the advantage, in comparison with a variant with a number of more or less cage-like groups of oblong elements, that it always mixes well without causing the formation of a single rotating mass.

Figure 5 shows an agitator 122 which is not provided with a central axle, as shown in figures 3 and 4, but has a more or less crankshaft-like construction. Rods 123, 124 and 125 are in this case sufficiently rigid elements, and the plates 109, 110, 111 and 112 are made sufficiently rigid for the agitator 122 to be "self supporting". The pins generally indicated by 1126 extend from the respective plates 109 - 112. They are placed in the same positions as the rods 117, 118, 119 shown in figure 3. Hereby, too, it appears that the effectiveness of the stirring process can be improved without there being any risk, even in the case of a damp environment, that the fodder will form lumps, through which the mixing would become less effective and the stirring power requirement would increase.

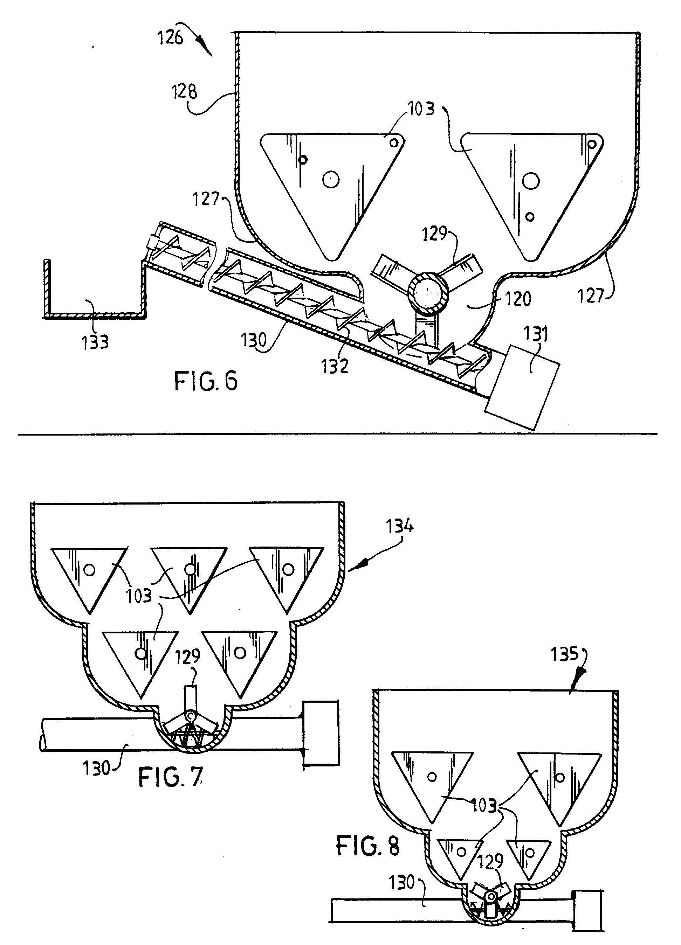

Figure 6 shows an apparatus 126 with two agitators 103 corresponding to figure 3. These agitators 103 move against partly cylindrical shell-shaped zones 127 of bunker 128.

Situated at the bottom there is the cylindrical shell-shaped zone 120, within which the agitator provided with vanes 129 is arranged. In this connection reference is made to applicants' not previously published Dutch patent application NL-87.01521.

At the zone 120 there extends a discharge tube 130, in which an archimedean screw 132, driven by a motor 131, is disposed. Through the empowerment of the motor 131 for a certain period the fodder to be delivered can be dosed. The discharge tube 130 extends transversely to the centre line of the various agitators and has an oblique disposition, such that the discharge tube 130 raises the material to be delivered and deposits it in a feeding trough 133.

The apparatus 126 can, through the use of the two agitators 103, have a relatively limited height in comparison to the apparatus 101 according to figure 3. This limited height is further fostered by the already mentioned oblique disposition of the discharge tube 130. The consequence of these measures is that, through simple means, the height to which the stockman must raise the fodder to load it into bunker 128 need only be very limited.

Figure 7 shows an apparatus 134 which has five agitators 103 and further agrees with the apparatus 101 according to figure 3.

Figure 8 shows an apparatus 135 with four agitators 103. This apparatus 135 also further agrees with the apparatus 101 according to figure 3.

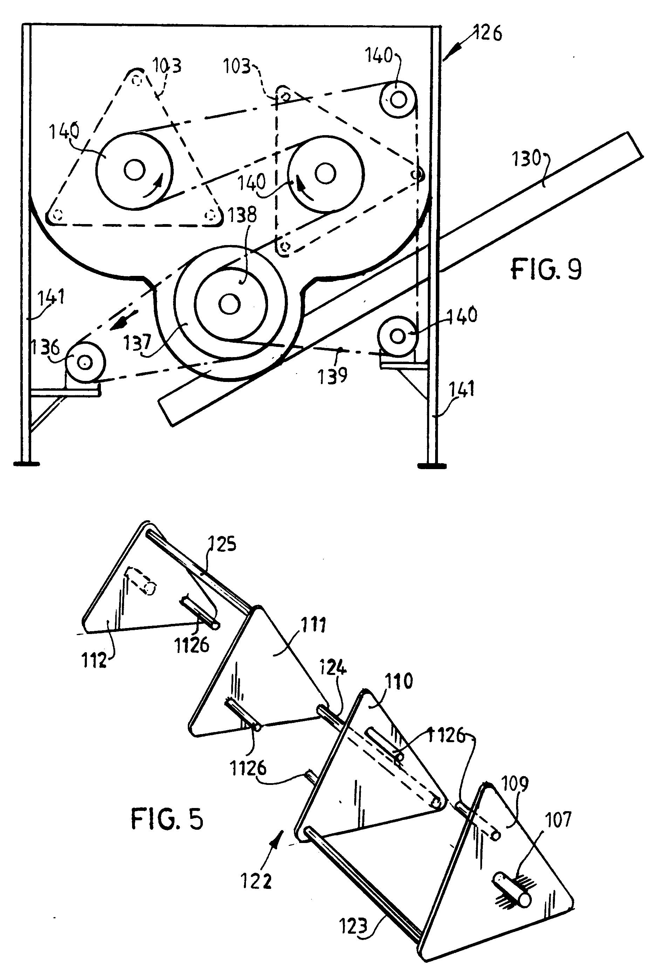

Figure 9 shows a side view of the apparatus 126 according to figure 6. This apparatus 126 comprises a drive motor 136, which turns a drive wheel 137 by means of a chain. This drive wheel 137 is coupled to a wheel 138 of lesser diameter, over which runs a chain 139, which drives in the shown manner the agitator 103 by means of wheels 140. The chain 139 runs further over free-running guide wheels 140.

For the most effective possible mixing of the loaded fodder, the agitator with vanes 129 is by preference also empowered during the driving of the (or each) agitator 103. If this is neglected then it appears that the fodder becomes compressed in the zone 120, whereby a good dosing is hindered.

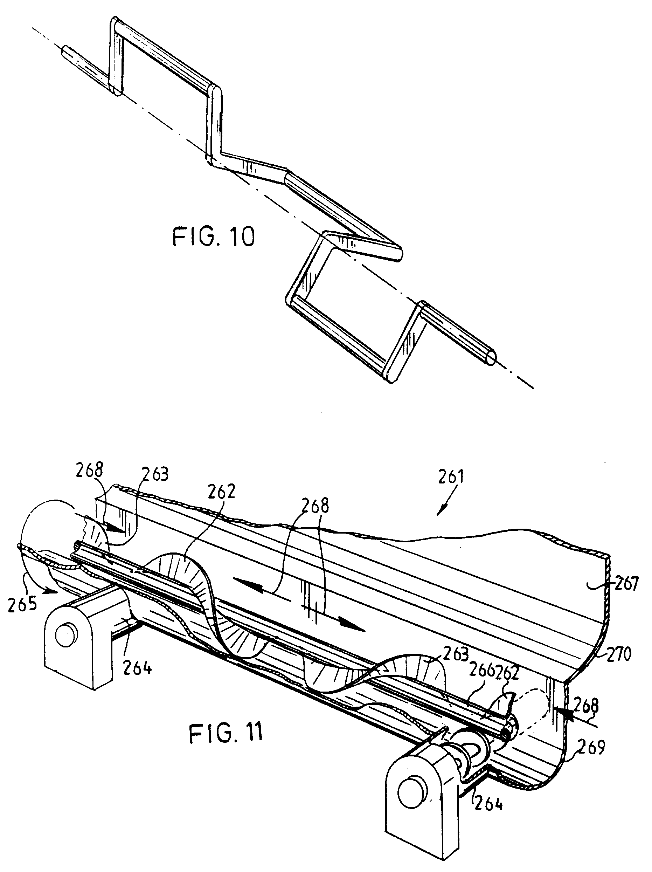

It is observed that the oblong elements can optionally be attached to spokes, either with a central axle, or as a crankshaft, as is shown in figure 10.

As far as the use of the apparatus in the context of mixing e.g. fodder in a supply container is concerned, it is noted that this apparatus according to the invention offers the considerable advantage that it does not display a ramming effect, which does occur with known apparatus that work with e.g. archimedean screws, and through the lesser resistance the agitator moves more lightly through the fodder.

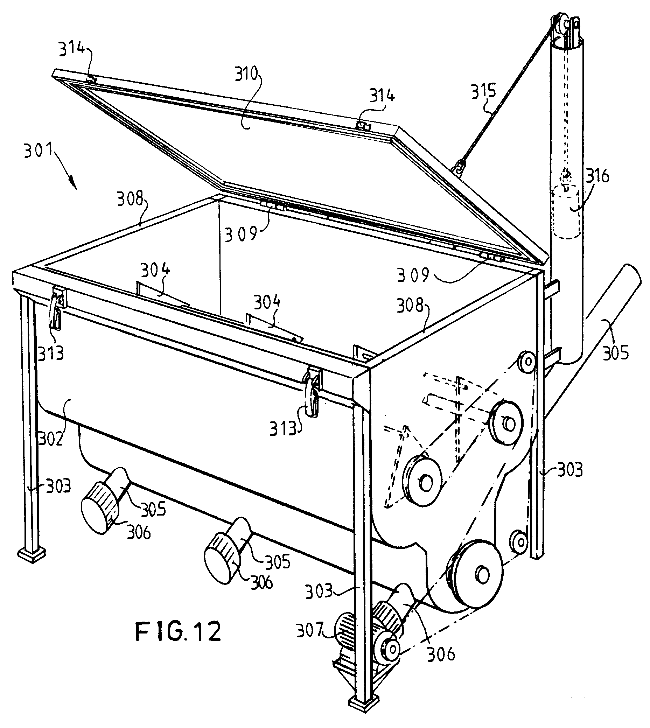

Figure 11 shows a detail of an apparatus 261 according to the invention. This differs from the apparatus discussed by reference to figures 1 and 2 in that the agitator vanes 216, 219 are replaced by plurality of helicoidal agitator surfaces 262, 263. Figure 11 shows two delivery devices. Between two adjacent delivery devices 264, there are located two agitator surfaces 262, 263 with opposite orientations. These orientations are such that, in conjunction with the direction of rotation, indicated by an arrow 265, of the agitator axle 266, the agitator surfaces impel the material in the container 267 in the direction of the imaginary vertical plane in which a delivery device 264 is situated. This is indicated by arrows 268.

As is apparent from figure 11, an interval is present between adjacent agitator surfaces 262, 263, while the agitator surfaces have at their ends a radius gradually reducing to zero, and join up smoothly with the axle 266. In contrast to the embodiment shown in figure 11, an agitator surface may comprise multiple windings. The smooth junction with the axle can be such that the envelope of the helical edge taken over the entire length of the helicoid has an unbroken form such that the radius is zero at the ends.

Attention is drawn to the point that the bottom zone 269 of the container 267 has the form of part of a cylinder, while the centre line of the axle 266 is approximately coaxial therewith. To this bottom zone 269 there connects a higher-situated zone 270, which similarly has more or less the form of part of cylinder. Not drawn is a second agitator with the same construction as the agitators 266, 262, 263, which is situated in this higher zone 270. In this connection reference is made to figure 2, and also to applicants' not previously published patent application NL-87.02687.

Figure 12 shows a container for fodder 301 in a first embodiment. This container comprises a bin 302 which is supported by legs 303. In the bin there are situated mixing and agitation means generally indicated by 304, which need no further specification in the context of this invention. At the bottom of the bin there are connected discharge tubes 305, which are coupled to dosing drives 306. The mixing means 304 is are driven by a motor 307.

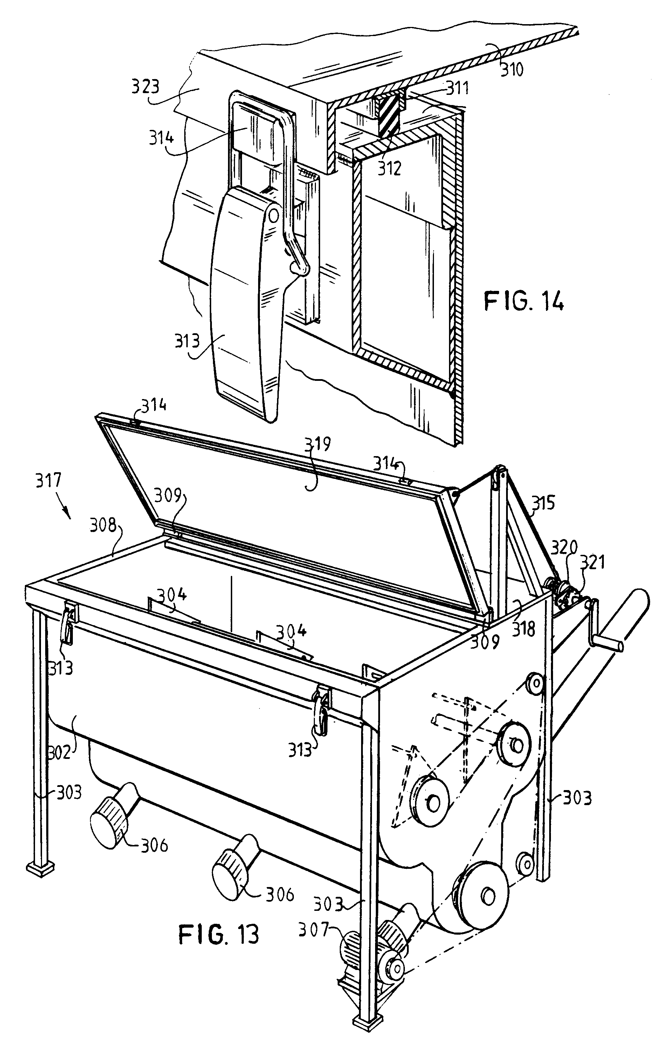

The top edge 308 of the container 301 supports, by means of hinges 309, a cover 310. This cover 310 bears an elastic sealing strip held in a U-channel in the manner shown in figure 14, which sealing strip can form a seal with the top edge 308.

As is apparent from figure 14, the top edge 308 is made completely flat and is so placed that the elastic strip 312 can press perpendicularly onto it. Figure 14 shows the construction of the front edge. This has, as is apparent from that drawing, a high mechanical strength, so that possible blows may be tolerated without the top edge 308 becoming deformed, which would deleteriously influence the sealing effect.

The cover 310 is forcefully closable by means of toggles 313, 314.

In the embodiment according to figure 12, the cover 310 is coupled by means of a cable 315 to a counter-weight 316, which serves for the reduction of the effective weight of the cover, so that it can more easily be raised. It will be clear without explanation that, depending on the size of the cover 310, the cable does not necessarily have to be attached to the side of the cover, but can preferentially be attached to e.g. the centre thereof.

Figure 13 shows an embodiment in which a container 317 is closable by means of a smaller cover 319. A part of the top surface is closed off by a fixed plate 318. It is observed that components in figure 13 corresponding to components in figure 12 are indicated by the same reference numbers.

For the raising and lowering of the cover 319 according to figure 13 there serves a winch 320, which comprises a pawl and ratchet mechanism 321, whereby a falling back of the cover 319 is prevented. It will further be clear that other means are eligible, for example a worm gear. For this embodiment too the cable 315 can optionally be attached at another point.

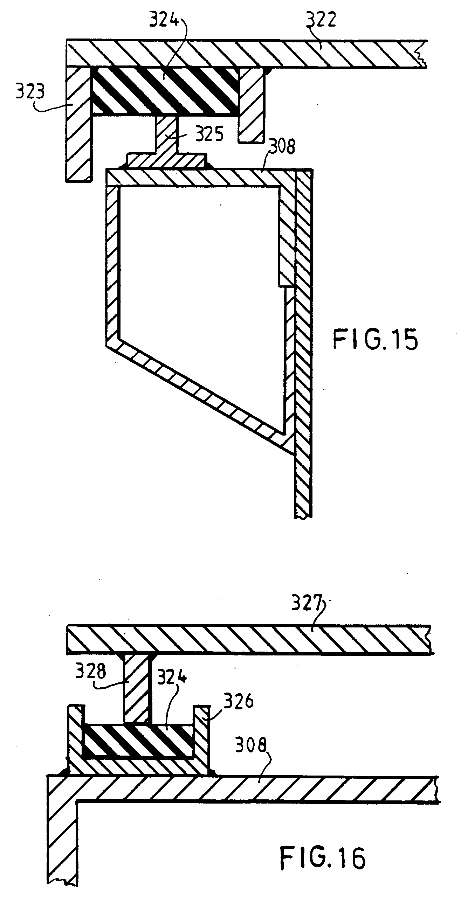

Figure 15 shows a cover 322 with an overhanging front edge 323, corresponding to the embodiment according to figure 14, and an elastic strip 324 which is mounted sunk in the manner shown into a U-channel shaped space. A rib 325, with which the elastic strip 324 cooperates, stands on the edge 308.

Figure 16 shows an embodiment in which the edge 308 supports a U-channel 326 in which an elastic strip 324 is embedded. Fixed by welding to a cover 327, there is a rib 328 which can cooperate sealingly with the elastic strip 324.

The invention is not restricted to the embodiments described and drawn which may be varied in a number of ways within the scope of the claims.

## Claims

1. Apparatus (1) for the mixing or loosening up and the dosed delivery of loose or lightly cohesive material, e.g. fodder, comprising a container (2) for the material, which container narrows in a downward direction, at least one rotationally drivable agitator (3) mounted in the bottom zone (9) of the container, and at least one delivery device (5, 6, 7) connected to the underside of the container for the dosed delivery of the material, wherein the bottom zone (9) of the container has the form of the wall of a cylinder, the agitator (3) has an axle (10) the centre line of which at least approximately coincides with the centre line of said cylinder, the axle (10) of the agitator (3) supports vanes (16) with an angular disposition such that when the axle is rotated they impel the material present in the container in the direction of the imaginary vertical plane in which a delivery device (5, 6, 7) is situated, and in that two or more delivery devices (5, 6, 7) are provided along the length of the container (2), **characterized in that** the container (2) has the same vertical cross-section everywhere with respect to a horizontal line and in that said delivery device includes a discharge tube (19) disposed at least approximately transversely with respect to the longitudinal direction of the agitator and connected to the bottom zone of the container, wherein said tube contains a discharge means (21) which is drivable by driving means (20), for example a rotatably driven archimedean screw, wherein the discharge means (21) of each delivery device projects into the bottom zone of the container (2), wherein the part of the discharge means lying in the bottom zone of the container is located below the agitator and at each delivery device the agitator extends at both sides of the discharge means, wherein the free end of each discharge tube discharges in a feeding space adapted for one animal (26) only, wherein said driving means (20) can be driven by control means (23) during a time corresponding with the dosing required for the animal which entered the feeding space.

2. Apparatus as claimed in claim 1, **characterized in that** the free end of the discharge tube (19) opens into or above a feeding trough (31).

3. Apparatus as claimed in anyone of the preceding claims, characterized by at least one second rotationally drivable agitator (4), arranged in the container (2) above the first-mentioned agitator (3), each second agitator (4) being made such that when the second agitator is rotated the material present in the container (2) is impelled in the direction of each imaginary vertical plane in which a delivery device (5, 6, 7) is situated.

4. Apparatus according to anyone of the preceding claims, **characterized in that** an additional delivery device (35) is mounted at each delivery device (5, 6 7) for the addition of other loose or lightly cohesive material to the delivered material.

5. Apparatus as claimed in claim 4, **characterized** by a supply tube (36) for the other material with a rotatably drivable archimedean screw (38) present therein, to which supply tube there connects for each delivery device (5, 6, 7) a delivery means (35) for the delivery of the other material.

6. Apparatus as claimed in one of the preceding claims, **characterized** by an animal recognition device (23, 25), additional to each delivery device (5, 6, 7), with a memory in which feeding data are stored for each animal to be fed, which recognition device is coupled to each delivery device (5, 6, 7) for the dosing of the quantity of fodder to be delivered.

7. Apparatus as claimed in claim 6, **characterized in that** each feeding space is closable by a closing means (41) such as a door or gate, which closing means is connected to drive means (42) which are coupled to the animal recognition apparatus (23, 25) for the purpose of holding the closing means closed during a period which is selected for a recognized animal and is stored in the memory.

8. Apparatus according to anyone of the preceding claims, **characterized in that** the agitator (103, 121, 122) comprises an axle (106) and at least one oblong element (114-119) that is situated at a distance from the axle and at each point has a radial dimension of maximally one third of the distance between that point and the centre line.

9. Apparatus according to claim 8, **characterized in that** the (each) agitator self-supporting and has more or less the form of a crankshaft.

10. Apparatus according to anyone of the claims 1-7, **characterized in that** the agitator is provided with a plurality of helicoid agitator surfaces (262, 263), wherein adjacent agitator surfaces have a mutually opposite orientation and wherein for each delivery device there are situated two agitator surfaces which when the agitator is rotated impel the material present in the container in the direction of the imaginary vertical plane in which the nearest delivery device is situated.

11. Apparatus according to claim 10, **characterized in that** the helical outer edge of each agitator surface (262, 263) joins up smoothly with the axle (266).

12. Apparatus according to anyone of the preceding claims, **characterized in that**, each discharge tube (130) has an oblique disposition such that the discharge tube elevates the material to be delivered.

13. Apparatus according to anyone of the preceding claims, characterized by removable closure means (310) for the substantially airtight sealing of the container (301).

14. Fodder mixing and dosing wagon, **characterized** by an apparatus as claimed in one of the preceding claims.

## Patentansprüche

1. Gerät (1) für das Mischen oder Auflockern und die dosierte Abgabe von losem oder leicht kohäsivem Material, z.B. Futter, das umfaßt einen Behälter (2) für das Material, wobei sich der Behälter in einer Abwärtsrichtung verengt, wenigstens ein drehbar antreibbares Rührwerk (3), befestigt in der Bodenzone (9) des Behälters, und wenigstens eine Abgabevorrichtung (5, 6, 7), verbunden mit der Unterseite des Behälters für die dosierte Abgabe des Materials, wobei die Bodenzone (9) des Behälters die Form einer Zylinderwand besitzt, das Rührwerk (3) eine Achse (10) besitzt, deren Mittelachse wenigstens annähernd mit der Mittelachse des Zylinders zusammenfällt, die Achse (10) des Rührwerks (3) Rührflügel (16) so in winkeliger Anordnung trägt, daß sie, wenn die Achse gedreht wird, das im Behälter vorhandene Material in die Richtung der imaginären vertikalen Ebene, in der eine Abgabevorrichtung (5, 6, 7) vorhanden ist, vorwärtsbewegen, und wobei zwei oder mehr Abgabevorrichtungen (5, 6, 7) entlang der Länge des Behälters (2) vorgesehen sind, **dadurch gekennzeichnet, daß** der Behälter (2) überall den gleichen vertikalen Querschnitt in Bezug auf eine horizontale Linie besitzt und daß die Abgabevorrichtung ein Abgaberohr (19) einschließt, das in Bezug auf die Längsrichtung des Rührwerks wenigstens annähernd transversal angeordnet und mit der Bodenzone des Behälters verbunden ist, wobei das Rohr ein Abgabemittel (21) enthält, das über Antriebsmittel (20) antreibbar ist, zum Beispiel eine drehbar angetriebene archimedische Schraube, wobei das Abgabemittel (21) jeder Abgabevorrichtung in die Bodenzone des Behälters (2) ragt, wobei der Teil des Abgabemittels, der in der Bodenzone des Behälters liegt, unterhalb des Rührwerks gelegen ist und sich das Rührwerk bei jeder Abgabevorrichtung zu beiden Seiten des Abgabemittels erstreckt, wobei das freie Ende jedes Abgaberohres in einen Futterraum abgibt, der nur für ein Tier (26) passend ist, wobei das Antriebsmittel (20) über Steuerungsmittel (23) über einen Zeitraum angetrieben werden kann, der der Dosierung entspricht, die für das Tier benötigt wird, das den Futterraum betrat.

2. Gerät wie in Anspruch 1 beansprucht, dadurch gekennzeichnet, daß das freie Ende des Abgaberohres in oder oberhalb einer Zuführung durch (31) öffnet.

3. Gerät wie in einem der vorhergehenden Ansprüche beansprucht, gekennzeichnet durch wenigstens ein zweites drehbar antreibbares Rührwerk (4), angeordnet in dem Behälter (2) oberhalb des erstgenannten Rührwerks (3), wobei jedes zweite Rührwerk (4) so ausgestaltet ist, daß, wenn sich das zweite Rührwerk dreht, das im Behälter (2) vorhandene Material in die Richtung jeder imaginären vertikalen Ebene, in der eine Abgabevorrichtung angeordnet ist, voranbewegt wird.

4. Gerät wie in einem der vorhergehenden Ansprüche beansprucht, dadurch gekennzeichnet, daß eine weitere Abgabevorrichtung (35) an jeder Abgabevorrichtung (5, 6, 7) für die Zugabe von anderem losen oder leicht kohäsivem Material zu dem abgegebenen Material montiert ist.

5. Gerät wie in Anspruch 4 beansprucht, gekennzeichnet durch ein Versorgungsrohr (36) für das andere Material mit einer drehbar antreibbaren archimedischen Schraube darin, wobei für jede Abgabevorrichtung (5, 6, 7) ein Abgabemittel (35) für die Abgabe des anderen Materials mit dem Versorgungsrohr verbunden ist.

6. Gerät wie in einem der vorhergehenden Ansprüche beansprucht, gekennzeichnet durch eine Tiererkennungsvorrichtung (23, 25), zusätzlich zu jeder Abgabevorrichtung (5, 6, 7), mit einem Speicher, in dem Fütterungsdaten für jedes zu fütternde Tier gespeichert werden, wobei die Erkennungsvorrichtung für die Dosierung der Menge des abzugebenden Futters mit jeder Abgabevorrichtung (5, 6, 7) gekoppelt ist.

7. Gerät wie Anspruch 6 beansprucht, dadurch gekennzeichnet, daß jeder Futterraum mit einem Schließmittel (41) wie einer Tür oder Gatter verschließbar ist, wobei das Schließmittel mit Antriebsmitteln (42) verbunden ist, die mit der Tiererkennungsvorrichtung (23, 25) für den Zweck gekoppelt sind, das Schließmittel für einen Zeitraum geschlossen zu halten, der für ein erkanntes Tier ausgewählt und im Speicher gespeichert ist.

8. Gerät wie in einem der vorhergehenden Ansprüche beansprucht, dadurch gekennzeichnet , daß das Rührwerk (103, 121, 122) eine Achse (106) und wenigstens ein rechteckiges Bauteil (114 - 119) umfasst, das in einem Abstand zur Achse angeordnet ist und an jedem Punkt eine radiale Ausdehnung von maximal einem Drittel des Abstandes zwischen diesem Punkt und der Mittelachse aufweist.

9. Gerät nach Anspruch 8, dadurch gekennzeichnet, daß das (jedes) Rührwerk selbsttragend ist und mehr oder weniger die Form einer Kurbelwelle besitzt.

10. Gerät wie in einem der Ansprüche 1-7 beansprucht, dadurch gekennzeichnet, daß das Rührwerk mit einer Mehrzahl von schraubenförmigen Rührwerksflächen (262, 263) versehen ist, wobei benachbarte Rührwerksflächen eine zueinander gegenüberliegende Anordnung besitzen und wobei für jede Abgabevorrichtung zwei Rührwerksoberflächen angeordnet sind, die, wenn das Rührwerk sich dreht, das im Behälter vorhandene Material in Richtung auf die imaginäre vertikale Ebene, in der die nächste Abgabevorrichtung angeordnet ist, voranbewegen.

11. Gerät nach Anspruch 10, dadurch gekennzeichnet, daß der schraubenförmige äußere Rand jeder Rührwerksfläche (262, 263) glatt mit der Achse (266) verbunden ist.

12. Gerät nach einem der vorhergehenden Ansprüche, dadurch gekennzeichnet, daß jedes Abgaberohr (130) eine geneigte Lage besitzt, so daß das Abgaberohr das Material, das abgegeben werden soll, hochfördert.

13. Gerät nach einem der vorhergehenden Ansprüche, gekennzeichnet durch entfernbare Schließmittel (310) für den im wesentlichen luftdichten Verschluß des Behälters (301).

14. Futtermisch- und -abgabewagen, gekenzeichnet durch ein wie in einem der vorhergehenden Ansprüche beanspruchtes Gerät.

## Revendications

1. Appareil (1) pour le mélange ou la désagrégation et la distribution dosée d'une matière en vrac ou légèrement cohérente, par exemple du fourrage, comportant un conteneur (2) pour la matière, lequel conteneur se rétrécit vers le bas, au moins un agitateur (3) pouvant être entraîné en rotation et monté sur la zone de fond (9) du conteneur, et au moins un dispositif (5, 6, 7) de distribution raccordé à la face inférieure du conteneur pour la distribution dosée de la matière, appareil dans lequel La zone de fond (9) du conteneur a la forme de la paroi d'un cylindre, l'agitateur (3) comporte un arbre (10) dont l'axe central coïncide au moins approximativement avec l'axe central dudit cylindre, l'arbre (10) de l'agitateur (3) supporte des palettes (16) dans une disposition angulaire telle que, lorsque l'arbre est mis en rotation, elles poussent la matière présente dans le conteneur dans la direction du plan vertical imaginaire dans lequel un dispositif de distribution (5, 6, 7) est situé, et deux ou plus de deux dispositifs de distribution (5, 6, 7) sont prévus sur la longueur du conteneur (2), caractérisé en ce que le conteneur (2) possède la même section transversale verticale en tous points par rapport à une ligne horizontale, et en ce que ledit dispositif de distribution comprend un tube (19) de déchargement disposé au moins à peu près transversalement par rapport à la direction longitudinale de l'agitateur et raccordé à la zone de fond du conteneur, ledit tube contenant un moyen (21) de déchargement qui peut être entraîné par un moyen d'entraînement (20), par exemple une vis d'archimède entraînée en rotation, le moyen (21) de déchargement de chaque dispositif de distribution faisant saillie dans la zone de fond du conteneur (2), la partie du moyen de déchargement s'étendant dans la zone de fond du conteneur étant placée au-dessous de l'agitateur et, à chaque dispositif de distribution, l'agitateur s'étendant sur les deux côtés du moyen de déchargement, l'extrémité libre de chaque tube de déchargement se déchargeant dans un espace d'alimentation conçu pour un animal (26) seulement, ledit moyen d'entraînement (20) pouvant être entraîné par un moyen de commande (23) pendant un temps correspondant à la dose demandée pour l'animal qui est entré dans l'espace d'alimentation.

2. Appareil selon la revendication 1, caractérisé en ce que l'extrémité libre du tube (19) de déchargement débouche dans ou au-dessus d'une auge (31) d'alimentation.

3. Appareil selon l'une quelconque des revendications précédentes, caractérisé par au moins un second agitateur (4) pouvant être entraîné en rotation, disposé dans le conteneur (2) au-dessus du premier agitateur cité (3), chaque second agitateur (4) étant réalisé de manière que, lorsque le second agitateur est en rotation, la matière présente dans le conteneur (2) soit poussée dans la direction de chaque plan vertical imaginaire dans lequel est situé un dispositif (5, 6, 7) de distribution.

4. Appareil selon l'une quelconque des revendications précédentes, caractérisé en ce qu'un dispositif supplémentaire (35) de distribution est monté à chaque dispositif (5, 6, 7) de distribution pour l'addition d'une autre matière en vrac ou légèrement cohérente à la matière distribuée.

5. Appareil selon la revendication 4, caractérisé par un tube (36) d'amenée pour l'autre matière, dans lequel une vis d'archimède (38) pouvant être entraînée en rotation est présente, tube d'amenée auquel est raccordé, pour chaque dispositif (5, 6, 7) de distribution, un moyen (35) de distribution pour la distribution de l'autre matière.

6. Appareil selon l'une des revendications précédentes, caractérisé par un dispositif (23, 25) de reconnaissance d'animal, s'ajoutant à chaque dispositif (5, 6, 7) de distribution, ayant une mémoire dans laquelle sont stockées des données d'alimentation pour chaque animal à alimenter, lequel dispositif de reconnaissance est couplé à chaque dispositif (5, 6, 7) de distribution pour le dosage de la quantité de fourrage devant être délivrée.

7. Appareil selon la revendication 6, caractérisé en ce que chaque espace d'alimentation peut être fermé par un moyen de fermeture (41) tel qu'une porte ou une grille, lequel moyen de fermeture est relié à des moyens d'entraînement (42) qui sont couplés à l'appareil (23, 25) de reconnaissance d'animal afin de maintenir le moyen de fermeture fermé durant une période qui est choisie pour un animal reconnu et qui est stockée dans la mémoire.

8. Appareil selon l'une quelconque des revendications précédentes, caractérisé en ce que l'agitateur (103, 121, 122) comprend un arbre (106) et au moins un élément oblong (114-119) qui est situé à une distance de l'arbre et qui, en chaque point, présente une dimension radiale égale au maximum à un tiers de la distance entre ce point et l'axe central.

9. Appareil selon la revendication 8, caractérisé en ce que le (chaque) agitateur est auto-portant et présente plus ou moins la forme d'un vilebrequin.

10. Appareil selon l'une quelconque des revendications 1-7, caractérisé en ce que l'agitateur est pourvu de plusieurs surfaces hélicoïdales (262, 263) d'agitation, des surfaces adjacentes d'agitation ayant des orientations mutuellement opposées et dans lequel sont situées, pour chaque dispositif de distribution, deux surfaces d'agitation qui, lorsque l'agitateur est en rotation, poussent la matière présente dans le conteneur dans la direction du plan vertical imaginaire dans lequel se trouve le dispositif de distribution le plus proche.

11. Appareil selon la revendication 10, caractérisé en ce que le bord extérieur hélicoïdal de chaque surface (262, 263) d'agitation se raccorde en douceur avec l'arbre (266).

12. Appareil selon l'une quelconque des revendications précédentes, caractérisé en ce que chaque tube (130) de déchargement présente une disposition oblique telle que le tube de déchargement élève la matière à distribuer.

13. Appareil selon l'une quelconque des revendications précédentes, caractérisé par un moyen amovible (310) de fermeture pour fermer de façon sensiblement étanche à l'air le conteneur (301).

14. Chariot pour le mélange et le dosage de fourrage, caractérisé par un appareil selon l'une quelconque des revendications précédentes.
